# DEMANDE DE BREVET EUROPEEN

(11) **EP 1 633 074 A1**
(43) Date de publication de la demande: **08.03.2006**
(21) Numéro de dépôt: 05105058.1
(22) Date de dépôt: 09.06.2005
(51) Int. Cl.: H04L 9/00

(54) **Circuit intégré à signal de sécurisation codé, procédé de sécurisation, dispositif et signal de sécurisation codé au moyen d'une clé dynamique correspondants.**

(30) Priorité: 03.09.2004 FR 0409370
(71) Demandeur: ATMEL NANTES SA, 44306 Nantes Cédex 3 (FR)
(72) Inventeur: COURTEL, Karl, 44400, REZE (FR)
(74) Mandataire: Bioret, Ludovic

(57) **Abrégé**

L'invention concerne un circuit intégré comprenant au moins un module de sécurisation (27), contrôlé par au moins un signal de sécurisation, le circuit étant rendu au moins partiellement non opérable si le module de sécurisation reçoit au moins un du ou des signaux de sécurisation ayant une valeur prédéterminée.

Selon l'invention, un tel circuit comprend des moyens de codage (27) du signal de sécurisation à l'aide d'une clé dynamique, recevant un signal de sécurisation statique et délivrant un signal de sécurisation dynamique, et des moyens de transmission au module de sécurisation de la clé dynamique ou d'au moins une information représentative de la clé dynamique.

## Description

### 1. Domaine de l'invention

Le domaine de l'invention est celui des systèmes électroniques. L'invention concerne notamment les circuits intégrés, par exemple les « puces » des cartes à puces ou les systèmes sur des puces.

Plus précisément, l'invention concerne la sécurisation d'informations et notamment d'informations de protection de tels systèmes électroniques.

### 2. Solutions de l'art antérieur

Dans de nombreux systèmes électroniques apparaît la nécessité de protéger de l'information issue de configurations ou de paramètres physiques.

Notamment dans les cartes à puces, certaines informations doivent rester inaltérables. De même, certaines configurations doivent ne pas être modifiables par opération d'intrusion. Dans le cas de circuits intégrés comprenant une partie logicielle, il est parfois nécessaire que cette partie logicielle soit accessible et/ou modifiable par le vendeur du système, afin de configurer le circuit. Cependant, une fois cette configuration effectuée, la partie logicielle doit souvent rester figée et inaccessible par le futur acheteur et tout autre tiers.

Afm d'interdire à un utilisateur, l'accès, la modification ou toute autre opération non autorisée sur des informations dans un système électronique, il existe des mécanismes de sécurisation activés par des d'informations de sécurisation statiques (moins d'une variation par minute). Ces informations de sécurisation sont portées par des signaux eux-mêmes statiques. Les mécanismes de sécurisation permettent de restreindre les accès ou usage du système et éventuellement de rendre non opérable de façon temporaire ou défmitive le système électrique si une opération non autorisée est mise en oeuvre.

Par exemple, selon un mécanisme de sécurisation simple à base d'un seul bit de sécurisation, si le niveau statique de sécurisation est à 0, le système fonctionne normalement. Par contre, le passage du niveau de sécurisation 0 au niveau 1 entraîne une impossibilité d'accéder à la lecture de la mémoire programme du système.

Ces niveaux de sécurisation sont configurables par des fusibles ou des bits programmables issus de points de mémoire ROM, EPROM, FLASH, EEPROM ou MRAM.

Ces points de mémorisation sont généralement associés aux blocs de mémoires (ou plus généralement à tout « bloc dur » c'est-à-dire comprenant des motifs réguliers aisément identifiables) des systèmes afin de partager les ressources analogiques nécessaires à leur bon fonctionnement (Pompe de charge, référence de tension, etc...).

Il en découle que des signaux de sécurisation statiques portant les informations de sécurisation statiques du système électronique sont émis par ces blocs durs (comprenant notamment des points de mémoire et/ou des capteurs) qui sont, de par leur taille et leur structure régulière, facilement identifiables sur le silicium.

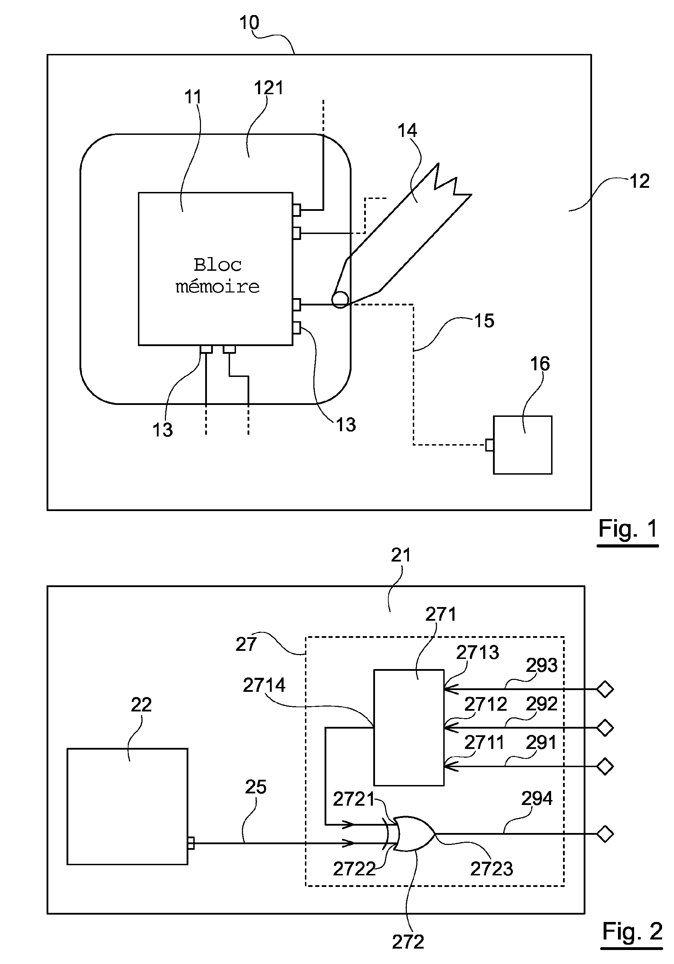

La **figure 1** présente le schéma d'un circuit intégré 10 comprenant un mécanisme de sécurisation simple tel que celui de l'exemple précité. Le système 10 comprend un bloc dur 11, un bloc de routage des signaux 12 et un module de sécurisation 16 noyé dans la zone de routage. Un signal de sécurisation statique est transmis au moyen d'une ligne 15 comprise dans le bloc de routage depuis le bloc dur 11 vers le module de sécurisation 16 (noyé dans la zone de routage) qui restreint l'utilisation du circuit 10 si une protection du système (caractérisée par le passage de l'information de sécurisation du niveau 0 au niveau 1 ou inversement) est mise en oeuvre.

Le bloc de routage 12 comprend une grande quantité de lignes de circuits entremélées de sorte qu'il n'est possible de repérer et suivre une ligne dans ce bloc, et notamment la ligne 15, que sur quelques microns en partant du bloc durs 11.

Des interfaces 13, aisément repérables, interconnectent le bloc de mémoires 11 et le bloc de routage 12. C'est dans une zone 121, dite « claire » (de quelques microns de longueur), du bloc de routage, au niveau des interfaces 13, que le piratage des signaux de sécurisation statiques de sortie peut être mis en oeuvre.

En effet, il est alors possible à un utilisateur « pirate » de poser une pointe métallique 14 sur le début de la ligne 15 (dans la zone 121) portant le signal de sécurisation statique sortant du bloc dur 11. Et ainsi, de forcer le niveau du signal de sécurisation (à 0 dans l'exemple précité) pour inhiber l'une des protections du circuit 10 (l'accès restreint au système dans l'exemple précité). Cette pose de pointe 14 permet ainsi à l'utilisateur pirate de mettre en oeuvre une opération non autorisée sans pour autant qu'elle ne soit détectée par le module de sécurisation 16.

Une autre technique de piratage, non illustrée, peut consister en la destruction partielle de la ligne 15, au moyen d'un laser ou par grattage, afin de rendre un noeud au bout de la ligne 15 flottant et d'altérer ainsi la valeur du niveau de sécurité 1 dans l'exemple précité.

### 3. Objectifs de l'invention

L'invention a notamment pour objectif de pallier ces inconvénients de l'art antérieur.

Plus précisément, un objectif de l'invention est de fournir une technique permettant de protéger du piratage les mécanismes de sécurisation d'un système électronique.

Un autre objectif de l'invention est de mettre en oeuvre une telle technique qui empêche le forçage d'un niveau de sécurisation statique notamment par pose d'une pointe ou par destruction d'une ligne.

L'invention a encore pour objectif de fournir une telle technique qui soit simple à mettre en oeuvre, qui n'occupe qu'une faible surface de silicium, qui soit peu coûteuse et qui ne nécessite pas d'étape supplémentaire de process.

### 4. Caractéristiques essentielles de l'invention

Ces objectifs, ainsi que d'autres qui apparaîtront par la suite, sont atteints à l'aide d'un circuit intégré comprenant au moins un module de sécurisation, contrôlé par au moins un signal de sécurisation, le circuit étant rendu au moins partiellement non opérable si le module de sécurisation reçoit au moins un du ou des signaux de sécurisation ayant une valeur prédéterminée.

Selon l'invention, un tel circuit comprend des moyens de codage du signal de sécurisation à l'aide d'une clé dynamique, recevant un signal de sécurisation statique et délivrant un signal de sécurisation dynamique, et des moyens de transmission au module de sécurisation de la clé dynamique ou d'au moins une information représentative de la clé dynamique.

Ainsi, l'invention repose sur une approche tout à fait nouvelle et inventive de procédé de sécurisation dont le codage dynamique des signaux de sécurisation permet de protéger du piratage les signaux de sécurisation statiques du système électronique.

Selon un mode de réalisation conforme à l'invention, le signal de sécurisation codé et la clé dynamique ou la ou les informations représentatives de la clé dynamique sont véhiculés au moyen d'au moins deux éléments conducteurs électrique physiquement proches.

Ainsi, il est nécessaire, afin de forcer un signal de sécurité codé temporellement, de mettre en oeuvre plusieurs pointes métalliques (une, pour le forçage du signal de sécurité et une ou plusieurs pour l'acquisition des informations représentatives de la clé).

Avantageusement, l'écartement entre les éléments conducteurs est défini de façon que soit impossible la pose simultanée de pointes métalliques distinctes sur chacun des éléments conducteurs dans au moins une région accessible, dite zone claire.

Ainsi, le choix du faible écartement des lignes électriques, dans la zone claire, permet d'empêcher physiquement la pose simultanée de l'ensemble des pointes métalliques nécessaires au piratage par forçage des niveaux de sécurité.

Selon une caractéristique préférentielle de l'invention, les éléments conducteurs sont distribuées sur au moins deux niveaux de routage distincts.

Préférentiellement, le circuit intégré met en oeuvre au moins deux signaux de sécurisation distincts, et génère une clé dynamique distincte pour chacun des signaux de sécurisation.

Selon une mise en oeuvre avantageuse de l'invention, le circuit intégré met en oeuvre des moyens de composition de la clé dynamique, tenant compte des n bits d'une clé intermédiaire, n étant un entier naturel non nul.

Avantageusement, les moyens de composition de la clé dynamique mettent en oeuvre une première porte OU exclusif appliquée sur les bits de la clé intermédiaire.

Préférentiellement, les moyens de codage mettent en oeuvre une seconde porte OU exclusif appliquée sur le signal de sécurisation statique et la clé dynamique.

Selon une caractéristique avantageuse de l'invention, les moyens de codage tiennent compte d'au moins une donnée dynamique délivrée par un générateur pseudo-aléatoire et/ou un compteur à p bits, où p est un entier naturel non nul.

Selon un mode de mise en oeuvre avantageux, au moins un des signaux de sécurisation est délivré par un bloc dur.

Préférentiellement, le bloc dur appartient au groupe comprenant les :
- mémoires ROM ;
- mémoires EPROM ;
- mémoires FLASH ;
- mémoires EEPROM ;
- mémoires MRAM ;
- capteurs de dépassivation ;
- capteurs d'attaque chimique ;
- capteurs d'ouverture ;
- capteurs de lumière ;
- capteurs de tension ;
- capteurs de fréquence.

Selon une mise en oeuvre avantageuse de l'invention, le circuit intégré est au moins en partie protégé par une métallisation.

Préférentiellement, la métallisation recouvre au moins les moyens de codage, les moyens de génération et/ou au moins une partie du bloc dur.

Selon une caractéristique avantageuse de l'invention, le module de sécurisation comprend des moyens de décodage mettant en oeuvre un traitement sensiblement symétrique à celui du codage.

Avantageusement, le signal de sécurisation statique est un signal binaire.

Selon un mode de réalisation préférentiel de l'invention, pour au moins une des clés intermédiaires, il met en oeuvre des moyens de dédoublement de la clé intermédiaire en une clé intermédiaire primaire et une clé intermédiaire secondaire, toutes deux corrélées, et des moyens d'isolation électrique entre la clé intermédiaire primaire et la clé intermédiaire secondaire.

Préférentiellement, le circuit intégré comprend :
- des moyens de stabilisation du signal de sécurisation décodé au moyen d'au moins une bascule ;
- des moyens de détection de la présence d'au moins un front sur le signal décodé ;
- des moyens de blocage du circuit intégré, si le signal décodé comprend au moins un front.

L'invention concerne également un procédé de sécurisation d'un circuit intégré comprenant au moins un module de sécurisation, contrôlé par au moins un signal de sécurisation, le circuit étant rendu au moins partiellement non opérable si le module de sécurisation reçoit au moins un du ou des signaux de sécurisation ayant une valeur prédéterminée, le procédé de sécurisation comprenant une étape de codage du signal de sécurisation à l'aide d'une clé dynamique et une étape de transmission au module de sécurisation de la clé dynamique ou d'au moins une information représentative de la clé dynamique.

Avantageusement, ledit signal de sécurisation codé et ladite clé dynamique ou la ou lesdites informations représentatives de ladite clé dynamique sont véhiculés au moyen d'au moins deux éléments conducteur électrique voisins.

Préférentiellement, l'écartement entre lesdits éléments conducteurs est défini de façon que soit impossible la pose simultanée de pointes métalliques distinctes sur chacun desdits éléments conducteurs dans au moins une région accessible, dite zone claire.

Les avantages du procédé de sécurisation sont les mêmes que ceux du circuit intégré décrit précédemment, ils ne sont pas détaillés plus amplement.

L'invention concerne également un dispositif de sécurisation pour circuit intégré tel que décrit précédemment.

L'invention concerne également un signal de sécurisation tel que décrit précédemment.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente le schéma d'un circuit intégré comprenant un mécanisme de sécurisation simple selon l'art ;
- la figure 2 illustre un mode de réalisation des moyens de codage selon l'invention d'un signal de sécurisation statique binaire dans le circuit intégré de la figure 1 ;
- la figure 3 présente un mode de réalisation physique des moyens de transmission selon l'invention du signal dynamique du circuit de la figure 2 vers un module de sécurisation dans un circuit intégré ;
- la figure 4 illustre un circuit intégré selon l'invention mettant en oeuvre 3 signaux de sécurisation.

### 6. Description d'un mode de réalisation de l'invention

Le principe général de l'invention repose sur le codage au moyen d'une clé dynamique, dépendant avantageusement des bits d'une clé intermédiaire secondaire, d'un signal de sécurisation statique, appartenant à un procédé de sécurisation d'un système électronique. Il repose également sur la transmission de ce signal codé depuis un bloc dur ainsi que des bits d'une clé intermédiaire primaire depuis un générateur de bits vers un module de sécurisation noyé dans un bloc de routage par des lignes électriques.

On se place dans la suite, sauf mention contraire, dans le cadre d'un circuit intégré tel que le circuit intégré 10 décrit en figure 1 mettant en oeuvre, en outre, la technique selon l'invention. Il peut par exemple s'agir du processeur d'une carte à puce.

On présente, en relation avec la **figure 2**, un mode de réalisation préférentiel des moyens de codage 27 d'un signal de sécurisation statique binaire compris dans un bloc dur 21 selon l'invention. Le bloc dur 21 comprend un point mémoire (ou de contrôle) 22 qui délivre le signal de sécurisation statique sur une ligne électrique 25 située dans le bloc dur 21.

Le bloc dur 21 peut comprendre au moins en partie au moins une des fonctions suivantes :
- mémoire ROM ;
- mémoire EPROM ;
- mémoire FLASH ;
- mémoire EEPROM ;
- mémoire MRAM ;
- capteurs de dépassivation ;
- capteurs d'attaque chimique ;
- capteurs d'ouverture ;
- capteurs de lumière ;
- capteurs de tension ;
- capteurs de fréquence.

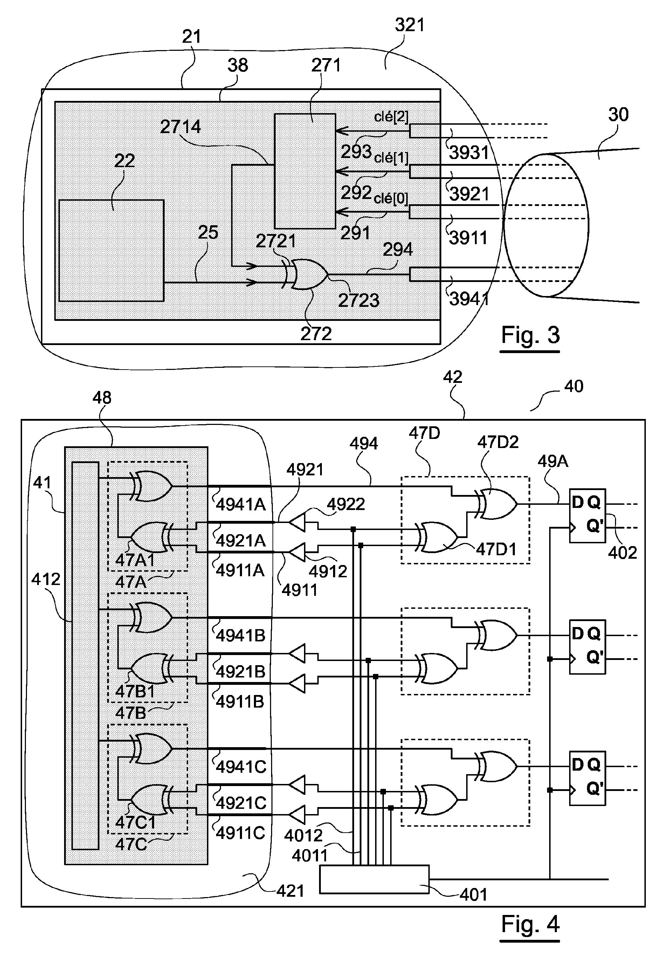

Les moyens de codage comprennent une première porte OU exclusif 271 dont les entrées 2711, 2712, 2713 sont respectivement reliées à trois lignes électriques 291, 292, 293 portant respectivement un premier bit dynamique référencé clé[0], un second bit dynamique clé[1] et un troisième bit dynamique clé[2] formant une clé intermédiaire secondaire (décrite ci-après en relation avec la figure 4) . Ainsi, la première porte permet de composer une clé dynamique par application de la fonction OU exclusif sur les bits clé[0], clé[1], clé[2] de la clé intermédiaire secondaire. La sortie 2714 de cette première porte 271, portant la clé dynamique, est reliée à une première entrée 2721 d'une seconde porte OU exclusif 272. La ligne électrique 25, reliée à une seconde entrée 2722 de la seconde porte 272, permet d'appliquer en entrée de cette seconde porte 272 le signal de sécurisation statique.

Bien entendu, selon des variantes non illustrées de ce mode de réalisation, le bloc dur 21 peut mettre en oeuvre une clé intermédiaire secondaire comprenant un autre nombre de bits dynamiques et donc une première porte OU 271 comprenant un nombre d'entrées égal au nombre de bits mis en oeuvre. Selon d'autres variantes, les moyens de codage peuvent mettre en oeuvre un autre nombre de portes OU exclusif. Par ailleurs, d'autres combinaisons qu'un OU exclusif peuvent être envisagées.

La seconde porte 272 délivre en sortie 2723, sur une ligne 294, le signal de sécurisation codé autrement appelé signal de sécurisation dynamique.

La **figure 3** illustre les moyens de transmission du signal dynamique du bloc dur 21 de la figure 2 vers un module de sécurisation (non illustré sur cette figure 3) dans le circuit intégré.

Une couche de métal 38 permet de protéger une partie du circuit des tentatives de piratage, visant à accéder au signal de sécurisation (notamment par forçage ou par destruction partielle). En effet, cette couche 38 recouvre notamment :
- le point mémoire 22, la ligne électrique 25 transmettant le signal de sécurisation statique ;
- la ligne électrique reliant la sortie 2714 de la première porte 271 à l'entrée 2721 de la seconde porte 272 portant la clé dynamique ;
- une partie des lignes 291, 292, 293, portant les bits dynamiques clé[0], clé[1], clé[2] de la clé intermédiaire secondaire, au niveau de l'entrée de la première porte 271 ;
- une partie de la ligne électrique 294 portant le signal de sécurisation dynamique au niveau de la sortie de la seconde porte 272 ;
- les première et seconde portes 271, 272.

La couche de métal 38 peut être réalisée en aluminium, en cuivre ou en tout autre matériau ou alliage adéquat.

Ainsi, une partie des lignes électriques 291, 292, 293, 294, portant respectivement les 3 bits dynamiques clé[0], clé[1], clé[2] de la clé intermédiaire secondaire ainsi que le signal de sécurisation dynamique, située dans la zone claire 321 du bloc de routage (non illustré) du circuit n'est pas recouverte par la couche de métal 38. C'est notamment au niveau de cette partie non recouverte de la zone claire que des tentatives de piratage peuvent être mises en oeuvre.

En conséquence, les parties 3911, 3921, 3931, 3941, de ces lignes électriques 291, 292, 293, 294 situées dans la zone claire 321 (et éventuellement dans le reste du bloc de routage) et qui ne sont pas recouverte par la couche de métal 38 sont réalisées de façon qu'elles soient suffisamment proches de sorte qu'il ne soit pas possible d'accéder simultanément, à l'aide de pointes métalliques 30, à chacun des bits clé[0], clé[1], clé[2] de la clé intermédiaire secondaire et au signal de sécurisation dynamique.

Selon des variantes non illustrées de ce mode de réalisation, les parties de lignes électriques 3911, 3921, 3931, 3941 sont distribuées sur plusieurs niveaux de routage empilés distincts.

La **figure 4** illustre un circuit intégré 40 mettant en oeuvre 3 signaux de sécurisation selon un exemple de réalisation préférentiel de l'invention.

Selon des variantes non illustrées de cet exemple de réalisation de l'invention, le circuit 40 peut comprendre un nombre quelconque de signaux de sécurisation.

Le circuit intégré 40 comprend un bloc dur 41 et un bloc de routage 42 positionné autour du bloc dur 41. Le bloc dur 41 comprend un bloc mémoire 412 duquel sont issus 3 signaux de sécurisation statiques, codés au moyen de 3 dispositifs de codages 47A, 47B, 47C, tous 3 identiques aux moyens de codage 27 de la figure 2 si ce n'est que chacune de leurs premières portes OU exclusif 47A1, 47B1, 47C1 ne comprend que deux entrées. Comme décrit ci-après, à chacune de ces portes correspond une clé intermédiaire secondaire distincte dont les deux bits dynamique sont appliqués sur les deux entrées.

Les clés dynamiques des signaux de sécurisation sont distinctes de manière à s'assurer qu'il ne soit pas possible, pour un utilisateur tentant de mettre en oeuvre une opération non autorisée dans le circuit 40 (ou de forcer le circuit 40), de déduire la valeur à imposer à un signal de sécurisation codé par l'observation de l'évolution d'un autre signal de sécurisation codé.

Une couche de métal 48 recouvre le bloc mémoire 412, une partie des lignes électriques et les dispositifs de codage 47A, 47B, 47C (de la même manière que la couche 38 sur la figure 3) de façon à ne laisser découvert dans la zone claire 421 que :
- des parties 4941A, 4941B, 4941C des lignes électriques portant les 3 signaux de sécurisation codés et
- des parties 4911A, 4921A, 4911B, 4921B, 4911C, 4921C des lignes électriques portant les 3 paires de bits des clés intermédiaires secondaires.

Les moyens de traitement et de transmission (codage, transmission et décodage, décrits ci-après) étant identiques pour chacun des 3 signaux de sécurisation, on ne va plus considérer dans la suite, pour simplifier, qu'un seul de ces signaux désigné par signal de sécurisation.

Le signal de sécurisation statique est transmis au dispositif de codage 47A qui lui est associé et est codé au moyen d'une clé dynamique obtenue, comme illustré par la figure 2, en appliquant la première porte 47A1 aux deux bits d'une clé intermédiaire secondaire.

Dans un mode de réalisation préférentiel, les bits de la clé intermédiaire secondaire sont des signaux binaires qui varient dans le temps de manière aléatoire. On décrit ci-après comment ils peuvent être obtenus.

Selon un mode de réalisation préférentiel de l'invention, on génère deux signaux dynamique, d'un bit chacun, au moyen d'une simple génération pseudo aléatoire de bits par un polynôme premier implémenté au moyen d'un « registre à décalage rebouclé » 401 (ou « Linear Feedback Shift Register » en anglais) ou même au moyen d'un dispositif de comptage. Ces deux bits dynamiques forment une clé intermédiaire primaire.

Les bits dynamiques de cette clé intermédiaire primaire sont portés par deux lignes électriques 4011, 4012 qui sont reliés à des lignes électriques 4911 et 4921.

On forme ainsi une clé intermédiaire de codage, appelée clé intermédiaire secondaire qui est transmise au dispositif de codage 47A, et une clé intermédiaire de décodage, appelée clé intermédiaire primaire qui est transmise à un dispositif de décodage 47D. Les bits de la clé intermédiaire secondaire sont rendus indépendants électriquement des bits de la clé intermédiaire primaire au moyen de deux circuit tampons 4912 et 4922, placés respectivement sur les lignes électriques 4011 et 401292. Ces deux circuits tampons 4912 et 4922 permettent ainsi de dédoubler les bits dynamiques de la clé intermédiaire primaire de manière à former des bits dynamique primaires et des bits dynamiques secondaires.

Le signal de sécurisation codé ainsi que les deux bits de la clé intermédiaire primaire sont transmis au dispositif de décodage 47D au moyen de 3 lignes électriques 494, 4011, 4012.

Les parties découvertes 4941A, 4911A, 4921A des lignes électriques 494, 4911, 4921 portant respectivement le signal de sécurisation codé ainsi que les bits de la clé intermédiaire secondaire (du coté codage), sont réalisées de façon qu'elles soient suffisamment proches de sorte qu'il ne soit pas possible d'accéder simultanément, à l'aide de pointes métalliques, à chacun des deux bits de la clé intermédiaire secondaire et au signal de sécurisation dynamique.

Le décodage du signal de sécurisation met en oeuvre un traitement sensiblement symétrique à celui du codage. Ainsi le dispositif de décodage 47D comprend lui aussi une première 47D1 et une seconde 47D2 porte OU exclusif. L'application des deux bits de la clé intermédiaire primaire à la première porte 47D1 permet d'obtenir la clé dynamique et l'application de la clé dynamique et du signal de sécurisation codé à la seconde porte 47D2 permet de retrouver le signal de sécurisation statique sur la sortie 49A du dispositif de décodage 47D.

A la sortie 49A, est placée une bascule 402 qui permet de stabiliser la valeur du signal de sortie issu de la seconde porte 47D2, qui doit être égal à la valeur statique du signal de sécurisation statique si aucune tentative de piratage n'a été mise en oeuvre.

La sortie de la bascule 402 est reliée à un ou plusieurs modules de contrôle non illustrés sur la figure 4. Ce ou ces modules de contrôle comprennent des moyens de détection de la présence de fronts sur le signal de sortie. La détection d'un certain nombre de fronts dans un intervalle de temps déterminé sur le signal de sortie entraîne une non opérabilité temporaire ou définitive du circuit intégré 40.

Il est à noter que la partie hors zone claire 421 du bloc de routage 42, et notamment, les parties concernées des lignes électriques 4911, 4921, 494, 4011, 4012, le dispositif de décodage 47D, la bascule 402 et le ou les modules de contrôle ne sont pas protégés par métallisation du fait qu'il n'est pas possible de les identifier parmi la grande quantité de lignes de circuits entremélées du bloc de routage 42.

Cependant, selon une variante non illustrée de ce mode de réalisation, le circuit intégré 40 peut être entièrement recouvert par la couche de métal 48.

Bien entendu, l'invention n'est pas limitée aux exemples de réalisation mentionnés ci-dessus.

En particulier, l'Homme du Métier pourra apporter toute variante dans les moyens de codage et/ou de décodage du circuit intégré selon l'invention, ou par exemple, sur les moyens de composition de la clé dynamique. Il pourra notamment mettre en oeuvre une seule porte OU exclusif appliquée à la fois sur le signal de sécurisation statique et sur les bits de la clé intermédiaire ou même choisir d'autres types de portes logiques afin de réaliser le codage et/ou le décodage, il pourra aussi réaliser le codage et/ou le décodage au moyen d'autres techniques adéquates.

De même, dans certaines variantes, il pourra mettre en oeuvre un dispositif de décodage différent du dispositif de codage.

L'invention s'applique également à un procédé de sécurisation mis en oeuvre dans le circuit intégré 40 décrit précédemment en relation avec la figure 4.

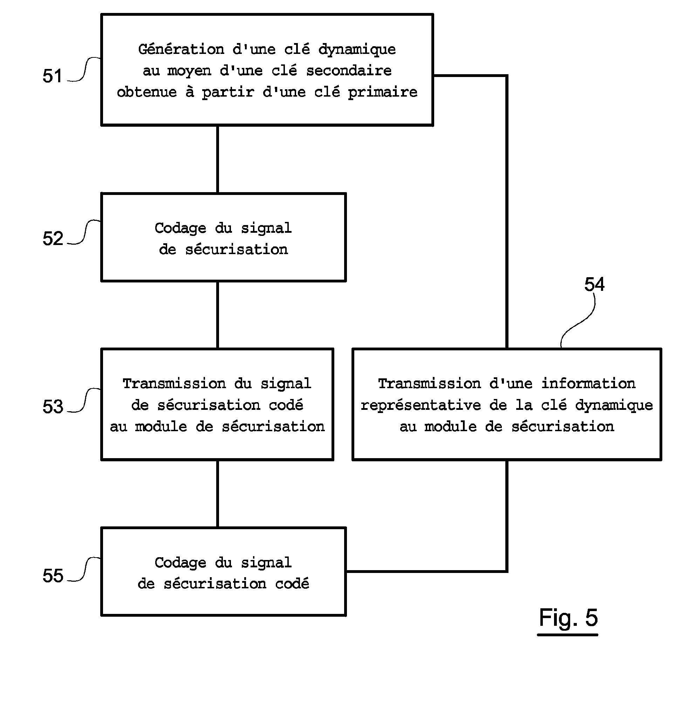

Ce procédé, illustré en figure 5, comprend les étapes suivantes :
- une première étape 51 de génération d'une clé dynamique au moyen d'une clé intermédiaire secondaire obtenue à partir d'une clé intermédiaire primaire ;
- une seconde étape 52 de codage du signal de sécurisation statique à l'aide de la clé dynamique ;
- une troisième étape 53 de transmission au module de sécurisation du signal de sécurisation codé ;
- une quatrième étape 54, mise en oeuvre en parallèle de la première étape 51, de transmission au module de sécurisation de la clé dynamique ou d'au moins une information représentative de la clé dynamique ;
- une cinquième étape 55 de décodage du signal de sécurisation codé au moyen de la clé intermédiaire primaire.

L'invention s'applique bien sûr, également au dispositif de sécurisation, pour circuit intégré tel que décrit précédemment, comprenant des moyens de codage, de transmission et de décodage d'au moins un signal de sécurisation du circuit intégré.

En outre, l'invention s'applique aussi aux signaux de sécurisation tels que décrits précédemment.

## Revendications

1. Circuit intégré comprenant au moins un module de sécurisation, contrôlé par au moins un signal de sécurisation, ledit circuit étant rendu au moins partiellement non opérable si ledit module de sécurisation (16) reçoit au moins un du ou desdits signaux de sécurisation ayant une valeur prédéterminée,
**caractérisé en ce qu'**il comprend des moyens de codage (27) dudit signal de sécurisation à l'aide d'une clé dynamique, recevant un signal de sécurisation statique et délivrant un signal de sécurisation dynamique, et des moyens de transmission audit module de sécurisation de ladite clé dynamique ou d'au moins une information représentative de ladite clé dynamique.

2. Circuit intégré selon la revendication 1, **caractérisé en ce que** ledit signal de sécurisation codé et ladite clé dynamique ou la ou lesdites informations représentatives de ladite clé dynamique sont véhiculés au moyen d'au moins deux éléments conducteurs électrique (291, 292, 293, 294) physiquement proches.

3. Circuit intégré selon la revendication 2, **caractérisé en ce que** l'écartement entre lesdits éléments conducteurs (291, 292, 293, 294) est défini de façon que soit impossible la pose simultanée de pointes métalliques distinctes sur chacun desdits éléments conducteurs (291, 292, 293, 294) dans au moins une région accessible, dite zone claire.

4. Circuit intégré selon l'une quelconque des revendications 2 et 3, **caractérisé en ce que** lesdits éléments conducteurs (291, 292, 293, 294) sont distribuées sur au moins deux niveaux de routage distincts.

5. Circuit intégré selon l'une quelconque des revendications 1 à 4, **caractérisé en ce qu'**il met en oeuvre au moins deux signaux de sécurisation distincts, et **en ce qu'**il génère une clé dynamique distincte pour chacun desdits signaux de sécurisation.

6. Circuit intégré selon l'une quelconque des revendications 1 à 5, **caractérisé en ce qu'**il met en oeuvre des moyens de composition (271) de ladite clé dynamique, tenant compte des n bits d'une clé intermédiaire, n étant un entier naturel non nul.

7. Circuit intégré selon la revendication 6, **caractérisé en ce que** lesdits moyens de composition de ladite clé dynamique mettent en oeuvre une première porte OU exclusif (271) appliquée sur lesdits bits de la clé intermédiaire.

8. Circuit intégré selon l'une quelconque des revendications 1 à 7, **caractérisé en ce que** lesdits moyens de codage mettent en oeuvre une seconde porte OU exclusif (272) appliquée sur ledit signal de sécurisation statique et ladite clé dynamique.

9. Circuit intégré selon l'une quelconque des revendications 1 à 8, **caractérisé en ce que** lesdits moyens de codage (27) tiennent compte d'au moins une donnée dynamique délivrée par un générateur pseudo-aléatoire (401) et/ou un compteur à p bits, où p est un entier naturel non nul.

10. Circuit intégré selon l'une quelconque des revendications 1 à 9, **caractérisé en ce qu'**au moins un desdits signaux de sécurisation est délivré par un bloc dur (21).

11. Circuit intégré selon la revendication 10, **caractérisé en ce que** ledit bloc dur (21) appartient au groupe comprenant les :
- mémoires ROM ;
- mémoires EPROM ;
- mémoires FLASH ;
- mémoires EEPROM ;
- mémoires MRAM ;
- capteurs de dépassivation ;
- capteurs d'attaque chimique ;
- capteurs d'ouverture ;
- capteurs de lumière ;
- capteurs de tension ;
- capteurs de fréquence.

12. Circuit intégré selon l'une quelconque des revendications 1 à 11, **caractérisé en ce qu'**il est au moins en partie protégé par une métallisation (38, 48).

13. Circuit intégré selon la revendication 12, **caractérisé en ce que** ladite métallisation (38, 48) recouvre au moins lesdits moyens de codage (27), lesdits moyens de génération (401) et/ou au moins une partie dudit bloc dur (21).

14. Circuit intégré selon l'une quelconque des revendications 1 à 12, **caractérisé en ce que** ledit module de sécurisation comprend des moyens de décodage (47D) mettant en oeuvre un traitement sensiblement symétrique à celui du codage.

15. Circuit intégré selon l'une quelconque des revendications 1 à 9, **caractérisé en ce que** ledit signal de sécurisation statique est un signal binaire.

16. Circuit intégré selon l'une quelconque des revendications 6 à 14, **caractérisé en ce que**, pour au moins une desdites clés intermédiaires, il met en oeuvre des moyens de dédoublement de ladite clé intermédiaire en une clé intermédiaire primaire et une clé intermédiaire secondaire, toutes deux corrélées, et des moyens d'isolation électrique entre ladite clé intermédiaire primaire et ladite clé intermédiaire secondaire.

17. Circuit intégré selon l'une quelconque des revendications 1 à 15, **caractérisé en ce qu'**il comprend :
- des moyens de stabilisation dudit signal de sécurisation décodé au moyen d'au moins une bascule (402) ;
- des moyens de détection de la présence d'au moins un front sur ledit signal décodé ;
- des moyens de blocage dudit circuit intégré, si ledit signal décodé comprend au moins un front.

18. Procédé de sécurisation d'un circuit intégré comprenant au moins un module de sécurisation, contrôlé par au moins un signal de sécurisation, ledit circuit étant rendu au moins partiellement non opérable si ledit module de sécurisation (16) reçoit au moins un du ou desdits signaux de sécurisation ayant une valeur prédéterminée,
**caractérisé en ce qu'**il comprend une étape de codage dudit signal de sécurisation à l'aide d'une clé dynamique et une étape de transmission audit module de sécurisation de ladite clé dynamique ou d'au moins une information représentative de ladite clé dynamique.

19. Procédé de sécurisation selon la revendication 17, **caractérisé en ce que** ledit signal de sécurisation codé et ladite clé dynamique ou la ou lesdites informations représentatives de ladite clé dynamique sont véhiculés au moyen d'au moins deux éléments conducteur électrique voisins.

20. Procédé de sécurisation selon la revendication 18, **caractérisé en ce que** l'écartement entre lesdits éléments conducteurs est défini de façon que soit impossible la pose simultanée de pointes métalliques distinctes sur chacun desdits éléments conducteurs dans au moins une région accessible, dite zone claire.

21. Dispositif de sécurisation pour circuit intégré, ledit dispositif comprenant au moins un module de sécurisation (16), contrôlé par au moins un signal de sécurisation, ledit circuit étant rendu au moins partiellement non opérable si ledit module de sécurisation reçoit au moins un du ou desdits signaux de sécurisation ayant une valeur prédéterminée,
**caractérisé en ce qu'**il comprend des moyens de codage (27) dudit signal de sécurisation à l'aide d'une clé dynamique, recevant un signal de sécurisation statique et délivrant un signal de sécurisation dynamique, et des moyens de transmission audit module de sécurisation de ladite clé dynamique ou d'au moins une information représentative de ladite clé dynamique.

22. Signal de sécurisation pour circuit intégré contrôlant au moins un module de sécurisation (16) dudit circuit, ledit circuit étant rendu au moins partiellement non opérable si ledit module de sécurisation reçoit ledit signal de sécurisation ayant une valeur prédéterminée,
**caractérisé en ce qu'**il est codé au moyen d'une clé dynamique
et que ladite clé dynamique ou au moins une information représentative de ladite clé dynamique est transmise audit module de sécurisation.
